# EUROPEAN PATENT SPECIFICATION

(11) **EP 4 353 370 B1**
(45) Date of publication and mention of the grant of the patent: **22.01.2025**
(21) Application number: 22201688.3
(22) Date of filing: 14.10.2022
(51) Int. Cl.: B07C 3/08, B07C 5/36, B65G 47/69

(54) **SORTER SYSTEM AND METHOD FOR SORTING**
SORTIERSYSTEM UND SORTIERVERFAHREN
SYSTÈME ET PROCÉDÉ DE TRI

(43) Date of publication of application: 17.04.2024
(73) Proprietor: BEUMER Group GmbH & Co. KG, 59269 Beckum (DE)
(72) Inventor: STAUN STAUN, Jorgen, 8382 Hinnerup (DK); JONES, Brian, SO41 0FD Hordle (GB); AUTHERS, Stephen, OX15 0NX Deddington Benbury Oxon (GB)
(74) Representative: Angerhausen, Christoph

(56) References cited:
- US-A1- 2007 209 976
- US-B1- 11 390 463

## Description

The invention relates to a sorter system for sorting objects, particularly parcels or mail items. Such sorter systems are used in parcel centres, for example, where parcels are sorted for delivery. The sorter system usually has a parcel sorter, in general a lying sorter, for sorting the objects. A sorter system having a lying sorter and a pouch sorter is e.g. known from DE 10 2018 219 583 A1. Further, US 11 390 463 B1 discloses a sorter system having a lying sorter with one or more shuttles, a pouch sorter, and a first transfer station, which is configured to transfer objects from the lying sorter to one or more flexible containers of the pouch system.

Parcel centres such as distribution accept and handle parcels, packages and other items of goods, generally shipments, within certain dimensions and weights and distribute or forward them. In contrast to department store shipping centres, such distribution centres are usually not designed to process orders, but rather to distribute the delivered parcels and other shipments as completely as possible within a defined time window. Generally, shipments arrive at the parcel distribution centre at different times and by different means of transport. The shipments are not necessarily separated according to size. Unloading of the shipments and feeding them to the sorter system can be automatic, semi-automatic semi-automatic or manual.

The lying sorter of the sorter system can be of the closed loop type (loop sorters) or of the line type (line sorters). For both types, the number of load handling means which transport or convey the shipments to the end points is relatively small in relation to the distributed number of pieces of shipments per hour, typically the ratio being less than 1:10. For example, a 500-meter parcel sorter may have 500 load handling means, with a distribution capacity of 9,000 items per hour. This is due in particular to the comparatively high cost share of the load handling means of the lying sorter. Thus, lying sorters are not particularly well suited for storing objects, such as shipments, parcels or the like.

If it is discovered during sorting that customs duty has not yet been paid and must therefore be paid in arrears, the parcel sorter must store the parcel for a specific time interval, usually up to a week, until outstanding fees and duties have been paid. Additionally, there is a growing number of services where the customer can specify when he wants to receive the parcel. Here, too, the parcels have to be stored temporarily.

Currently, these parcels are sorted out in special end points and usually stored temporarily in roller containers. This storing is cumbersome and inconvenient, since the parcels are piled upon each other without any ordering, making it difficult and time consuming to identify and retrieve a specific parcel from the pile.

In addition to the known storage in roller containers, where the problem usually is that it is not known exactly where which parcel is (as in case when custom duties have been paid and thus the stored parcel is to be forwarded) as mentioned above, there are also automatic high-bay warehouses that may be used for storage. These automatic high-bay warehouses are expensive and require intensive maintenance.

It is therefore the object of the present invention to provide a sorting system and a method for sorting which overcome these drawbacks. These problems are solved by a sorter system having the features of claim 1, and a method having the features of claim 12. Preferable embodiments are the subject of the dependent claims.

The invention provides a sorter system with a pouch system having a pouch storage, wherein objects to be buffered or stored can be transferred from the first sorter (i.e. the lying sorter) to the pouch system. Thus, the pouch buffer can be used to store objects, such as e.g. parcels for which customs duty has not been paid. Such pouch systems are relatively easy and cheap to design and maintain. Furthermore, it is straightforward to extend the storing capacity of the pouch storage. Additionally, the pouch ssystem and/or the pouch storage can discharge a specific pouch stored in the pouch storage, so that a specific stored object can be quickly and easily retrieved.

A first aspect of the invention relates to a sorter system for sorting objects, the sorter system having a first sorter with a multiplicity of first load handling means for objects to be conveyed or sorted, the sorter system having a pouch system with a multiplicity of second load handling means for objects to be conveyed and/or sorted or buffered, the sorter system having a first transfer station which is configured to transfer objects from the first load handling means of the first sorter to the second load handling means of the pouch system, wherein the first sorter is or comprises a lying sorter, and the pouch system is or comprises a pouch conveyor, the second load handling means being or comprising pouches, wherein the pouch system has a pouch storage for storing pouches, such that objects held by pouches are storable in the pouch storage.

Thus, an object, such as e.g. a parcel for which duties have not been paid, fed to the first sorter can be transferred via the first transfer station to the pouch system and stored in the pouch storage. In particular, the object may be transferred from a first handling means with the first transfer station to a second handling means, in particular the pouch, and the pouch containing the object may be stored in the pouch storage. Then, the object can be easily retrieved (e.g. when the duty has been paid), i.e. the pouch containing the object can be conveyed to the second transfer station, where the object can be transferred to a first handling means and subsequently discharged. In other words, a specific object (or pouch) stored in the pouch storage can be easily identified and retrieved. In particular, the sorter system, pouch system and/or the pouch storage can be configured to identify and/or discharge, or transfer to the first sorter, any given or specified pouch in the pouch ssystem and/or the pouch storage. In some embodiments, the objects may have an identifies, which may be unique. For instance, the identifier can comprise one or more of alphanumeric code, QR-Code, Bar-Code, and/or can comprise or be stored on an RFID-Chip. In some embodiments, the identifier may be arranged on a surface or the object. The identifier can be scanned or detected, such that a specific parcel can be identified. The sorter system can have one or more corresponding detectors or sensors, such as a camera, a scanner, or a reader. Thereby, the position of one, more than one or all objects in the sorter system can be known or determined. The identifier can comprise status data of the object.

The objects can be or comprise parcels, mail items, shipments, packages or the like. However, the invention is not restricted to such objects.

The lying sorter can be or comprise a cross-belt sorter or a tilt-tray sorter. For instance, the first load handling means can be or comprise carriages having one or more cross-belts, and/or one or more tilt-trays.

The sorter system can comprise a second sorter and/or second pouch system. The second sorter can be a pouch sorter. In some embodiments, the second sorter and/or second pouch system can comprise a pouch conveyor. The second sorter and/or second pouch system may have one, several or all features and/or advantages of the first sorter or the pouch system, respectively. In some embodiments, the sorter system can have a third transfer station which can be configured to transfer objects from the first sorter to the second sorter and/or second pouch system. In some embodiments, the sorter system can have a fourth transfer station which can be configured to transfer objects from the second sorter and/or the second pouch system to the first sorter. In some embodiments, the second sorter and/or second pouch system may provide additional storage for storing objects. Additionally or alternatively, the second sorter and/or second pouch system may be configured to store specific or specified objects. In some embodiments, only specific or specified, e.g. pre-determined, objects may be stored in the second sorter and/or second pouch system.

It may be provided that an object may be stored in a first pouch system or a second pouch system based on a feature or whether the object fulfills a criteria. The pouch system may be the first pouch system. In some embodiments, the sorter system can have more than two pouch systems, and an object may be stored in a specific or sepcified pouch system or a second pouch system based on a criteria. In some embodiments, the criteria may comprise a e.g. a delivery date. For instance, a first pouch system may store objects, for which a delayed delivery with a first delivery date has been requested. The second pouch system may store objects, for which a delayed delivery with a second delivery date has been requested. The second delivery date may be earlier or later than the first delivery date. First and second delivery date may differ by one or more days. In some embodiments, the criteria may comprise one or more of delivery date, delivery destination, sender of the object, addressee of the object, identity and/or address of sender and/or addressee, customs data, or content, and/or paid duty.

The sorter system can have a second pouch system, wherein the sorter system can be configured to transfer objects having a feature and/or fulfilling a criteria to the pouch system, and the sorter system can be configured to transfer objects having a different feature and/or fulfilling a different criteria to the second pouch system. The feature and/or different feature can comprises one or more of delivery date, delivery destination, sender of the object, addressee of the object, identity and/or address of sender and/or addressee, customs data, or content. Fulfilling the criteria and/or fulfilling the different criteria can comprise the object matching one or more of delivery date, delivery destination, sender of the object, addressee of the object, identity and/or address of sender and/or addressee, customs data, or content. The sorter system can be configured to check and/or determine whether an object has a feature of fulfills a criteria and can then transfer the object accordingly. For instance, an object may have a feature "delivery date" which can be in date-fomat such as e.g. "yyyy-mm-dd" or the like. If e.g. the date-format matches a determined or specific date-format, the object may fulfil the criteria or have the feature. Two objects having different features may comprise them having the same kind of feature or criteria, but different values of said feature or criteria. For instance, a first object may have the feature "duty paid" with value "false" and a second object may have the feature "duty paid" with value "true", such that the first object may fulfill the criteria whereas the second may not (or vice versa). In that example, the criteria may be "duty paid". Other features or criteria may be checked, combined or chosen. Objects may be transferred to the first pouch system or the second pouch system based on a combination of criteria and/or features. If the sorter system has more than two pouch systems, the objects may be transferred or distributed to the more than two pouch systems accordingly.

The first pouch system may be configured to store or buffer objects. The second pouch system may be configured to store of buffer objects. The second pouch system and or additional pouch systems may have one, more or all features or advantages of the pouch system.

The sorter system can have a second transfer station which can be configured to transfer objects from the second load handling means of the pouch system to the first load handling means of the pouch system.

The sorter system can have a control unit which can be configured to determine whether an object conveyed by a first load handling means of the first sorter is to be transferred, with the first transfer station, to a second load handling means of the pouch system or to be discharged from the first sorter. In some embodiments, the control unit can determine whether the object is to be stored by checking and/or comparing status data of the object. Status data can comprise e.g. delivery date, delivery destination, sander of the object, addressee of the object, customs data, or content of the object. The storage system can have one or more sensors for gathering, capturing or retrieving status data of the object. The sensor may comprise for instance a camera, a weighing machine or scales, a scanner such as a barcode or QR-scanner, or a scanner to scan the content of the6bjectt, such as e.g. an X-ray scanner or the like. The control unit may compare the status data gathered by the sensor to data stored in a database, in order to determine whether an object should be stored in the pouch storage and/or transferred via the first transfer station to the pouch system.

The control unit can further be configured to determine whether an object conveyed by a second load handling means of the pouch system or stored in the pouch storage is to be transferred, preferably with the second transfer station, to a first load handling means of the first sorter. For instance, the control unit may determine upon payment of outstanding duties or fees that the object is to be transferred from the pouch system via the second transfer station to the first sorter. Subsequently, the object can be discharged. In some embodiments, the control unit can alternatively or additionally determine that an object is to be unloaded from the pouch system, when the object is stored for longer than a specified time interval, e.g. longer than seven days. Unloading the object may comprise not transferring the object to the first sorter, but instead discharging the object via an unloading station of the pouch system from the pouch system.

The first sorter can have a feed station to feed objects to the first load handling means. The first sorter can have a discharge station for discharging objects from the first load handling means. In some embodiments, the discharge station can comprise or can be a chute. In some embodiments, all objects to be sorted are fed via the feed station to the first sorter, whereupon the control unit may determine for every object whether it is to be discharged by the discharge station or transferred via the first transfer station to the pouch system for storage.

The pouch system can have a loading station to load objects into the second load handling means. The pouch system can have an unloading station for unloading or discharging objects from the second load handling means. Via the unloading station, objects may be removed or discharged from the pouch system when they have been longer than a specified time interval, e.g. longer than seven days. Via the loading station, objects may be reintroduced into the pouch system. For instance, if an object has been unloaded via the unloading station, the same object can be fed back to the pouch system again via the loading station.

The pouch storage can have at least one dynamic buffer. In some embodiments, the pouch conveyor can be or can comprise the dynamic buffer. The dynamic buffer can have more than one buffer loop. The pouch storage, in particular the dynamic buffer, can be configured to discharge a specific pouch stored in the pouch storage, such that a specific pouch stored in the pouch storage (and the object contained therein) may be retrieved. The buffer loops and/or track switches of the pouch storage can be arranged accordingly. In some embodiments, the pouch storage has a maximum input, output and/or throughput of 1500 pouches/hour. In some embodiments, the pouch storage, or the dynamic buffer, respectively, does not sort or sequence the pouches and/or does not have a matrix sorter. In some other embodiments, the pouch storage, or the dynamic buffer, respectively, is configured to sort or sequence the pouches. In some embodiments, a matrix sorter can be provided.

Unlike the lying sorter, the capacity of the pouch system, such as e.g. the capacity for accommodating, buffering and/or storing pouches, can be expanded almost at will, even vertically. As a result, the storage requires a much reduced foot print in some embodiments, so that floor space becomes available for additional or other machinery, sorters, or functional units of the sorting system.

The pouch system can have a pouch buffer. The pouch buffer can provide empty pouches to be filled with objects to be transferred from the first sorter, i.e. the lying sorter. In some embodiments, the pouch buffer can provide storage for pouches (containing objects) to be stored, in addition to the pouch storage.

In or at the first transfer station, the first sorter and the pouch system can be arranged such that an object discharged by a first load handling means is directly transferable to a second load handling means. In some embodiments the object can fall into or onto the second load handling means, e.g. can fall into a pouch. When the first load handling means comprises a cross-sorter, the object can e.g. be conveyed such that it may fall from the cross-sorter into or onto the second load handling means, e.g. a pouch. When the first load handling means comprises a tilt-tray, the tray may be tilted such that the object may fall from the tilted tray into or onto the second load handling means, e.g. pouch. The first load handling means, for example a cross-belt or a tilt-tray, may be controlled such that the object is discharged such that it may fall into or onto the second load transfer means.

Additionally or alternatively, the first transfer station can have a first transfer point, onto which an object conveyed by a first load handling means can be dischargeable by the first load handling means, such that the object can be transferable from the first transfer point into or onto a second load handling means. In some embodiments, the object can be transferred from the first transfer point by one or more of a robot, a conveyor, a chute and/or a worker.

In or at the second transfer station, the first sorter and the pouch system can be arranged such that an object discharged by a second load handling means is directly transferable to a first load handling means. In some embodiments the object can fall into or onto the first load handling means. In some embodiments, the object can fall into or onto a cross-belt or a tilt-tray. When the second load handling means comprises a pouch, the pouch may be opened such that the object may fall from the pouch into or onto the first load handling means. The second transfer station can be configured to open the pouch accordingly.

Additionally or alternatively, the second transfer station can have a second transfer point, onto which an object conveyed by a second load handling means can be dischargeable by the second load handling means, such that the object can be transferable from the second transfer point into or onto a first load handling means. In some embodiments, the object can be transferred from the second transfer point by one or more of a robot, a conveyor, a chute and/or a worker.

The first transfer station can be configured to automatically transfer objects. The second transfer station can be configured to automatically transfer objects. For instance, the robot can be a picking robot, an articulated robot. However in some embodiments, the objects are to be transferred manually.

The first transfer station can have a detector which can be configured to identify, check and/or track an object transferred in, at or by the first transfer station. The second transfer station can have a detector which can be configured to identify, check and/or track an object transferred in, at or by the second transfer station. The detector can comprise a camera, a sensor or a reader. The detector can be configured to detect an identifier of the object.

Another aspect of the invention relates to a method for sorting objects, particularly parcels or mail items, the method comprising the steps:
- feeding an object to a first sorter of a sorter system;
- determining whether the object is an object to be buffered;

- when the object is determined to be not an object to be buffered, discharging the object at an end point of the first sorter; and
- when the object is determined to be an object to be buffered, the method comprising the steps:
   - transferring the object from the first sorter to a pouch system of the sorter system;
   - buffering the object in the pouch system;
   - either transferring the object from the pouch system to the first sorter and discharging the object at the end point of the first sorter, or unloading the object from the pouch system;
wherein the first sorter is or comprises a lying sorter, and the pouch system comprises or is a pouch conveyor having pouches for conveying or holding the object.

When transferring the object from the first sorter to the pouch system, the object may be transferred with a first transfer station of the sorter system. When transferring the object from the pouch system to the first sorter, the object may be transferred with a second transfer station of the sorter system. When unloading the object from the pouch system, the object may be unloaded with an unloading station of the pouch system.

The method can be carried out by a sorter system as described above. A sorter system as described above can be configured to carry out the method.

The end point may be located at a discharge station. A discharge station may comprise the end point.

Buffering the object in the pouch system can comprise storing the object in a pouch storage or a pouch buffer.

Determining whether the object is an object to be buffered can comprise checking status data of the object. In some embodiments, the status data can comprise at least one of, or a combination of, delivery date, delivery destination, sender of the object, addressee of the object, identity and/or address of sender and/or addressee, customs data, or content such as content of the object, package parcel and the like.

Buffering the object in the pouch system can comprise buffering the object for a specified time interval and/or until a condition is fulfilled. Checking whether the condition is fulfilled can comprise checking status data of the object. The status data can comprise at least one of delivery date, delivery destination, sender of the object, addressee of the object, customs data, or package content. In some embodiments, the condition can pertain to (or equal) one or multiple of a payment of duties and/or fees, a request for delivery, e.g. by a sender and/or addressee, a clearance by an official, a delivery date, a country of origin, customs data, content of the object (e.g. content of parcel or package), or the like. The specified time interval can be seven days.

The object can be transferred to the first sorter, when the condition is fulfilled. In some embodiments, the object can be unloaded, when the specified time interval is elapsed and the condition is not fulfilled.

A second object can be loaded into the pouch system with a loading station of the pouch system. After loading the second object into the pouch system, the second object can either be buffered in the pouch system or be transferred to the first sorter with the second transfer station.

Transferring the object from the first sorter to the pouch system can comprise directly transferring the object from a first load handling means of the first sorter into or onto a second load handling means of the pouch system by dropping it into the second load handling means. Alternatively or additionally, transferring the object from the first sorter to the pouch system can comprise discharging the object at a transfer point of the first transfer station from a first load handling means of the first sorter, and transferring the object by a robot, conveyor, chute and/or worker to a second load handling means of the pouch system.

Transferring the object from the pouch system to the first sorter can comprise directly transferring the object from a second load handling means of the pouch system into or onto a first load handling means of the first sorter by dropping it into the second load handling means. Alternatively or additionally, transferring the object from the pouch system to the first sorter can comprise discharging the object at a transfer point of the second transfer station from a second load handling means of the pouch system, and transferring the object by a robot, conveyor, chute and/or worker to a first load handling means of the first sorter.

The invention is further described and disclosed in view of the following figures:
- Fig. 1:: a schematic view of a sorter system according to an exemplary embodiment of the invention;
- Fig. 2:: a schematic view of an exemplary sorter system according to a second exemplary embodiment of the invention;
- Fig. 3:: a schematic view of an exemplary sorter system according to another exemplary embodiment of the invention;
- Fig. 4:: a schematic view of a pouch system according to an exemplary embodiment of the invention;
- Fig. 5:: a schematic view of an embodiment of a first transfer station;
- Fig. 6:: schematic views of embodiments of a first transfer station;
- Fig. 7:: another schematic views of an embodiment of a first transfer station;
- Fig. 8:: a schematic view of an embodiment of a second transfer station;
- Fig. 9:: schematic views of embodiments of a second transfer station; and
- Fig. 10:: another schematic views of an embodiment of a second transfer station.

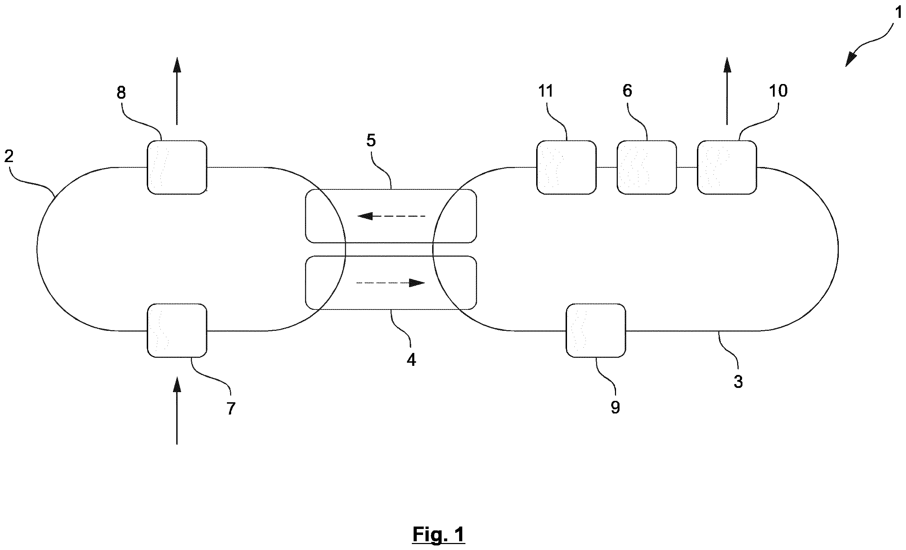

Figure 1 shows a schematic view of an exemplary embodiment of a sorter system 1 according to the invention. The sorter system 1 has a first sorter 2 and a pouch system 3. The sorter system 1 has a first transfer station 4, via which objects 14 can be transferred from the first sorter 2 to the pouch system 3 (as indicated by the dashed arrow in figure 1). In particular, objects 14 held by first load handling means 12 of the first sorter 2 can be transferred to second load handling means 13 of the pouch system 3 with the first transfer station 4. The sorter system 1 can have a second transfer station 5, via which objects 14 can be transferred from the pouch system 3 to the first sorter 2 (as indicated by the dashed arrow in figure 1). In particular, objects 14 held by second load handling means 13 of the pouch system 3 can be transferred to first load handling means 12 of the fist sorter 2 with the second transfer station 5.

The first sorter 2 is or comprises a lying sorter. The lying sorter may be a closed loop sorter or a line sorter. The lying sorter may be comprise a cross-belt sorter or a tilt-tray sorter. The first load handling means 12 of the first sorter 2 can e.g. be or comprise carriages having one or more cross-belts, and/or one or more tilt-trays. The pouch system 3 is or comprises a pouch conveyor. The second load handling means 13 of the pouch system 3 can be or comprise pouches. The first load handling means 12 and/or the second load handling means 13 can be configured to hold or contain objects 14, e.g. mail items, parcels, packages, shipments, or the like. The first sorter 2 can transport or convey objects 14 with its first load handling means 12. The pouch system 3 can transport or convey objects 14 with its second load handling means 13. The respective load handling means can be configured to receive and/or discharge objects 14 transported with or held or accommodated therein.

The pouch system 3 has a pouch storage 6. The pouch storage 6 is configured to store pouches, such as pouches containing objects 14 to be stored. The pouch storage 6 can have at least one dynamic buffer. The dynamic buffer can have more than one buffer loop. The pouch storage 6, in particular the dynamic buffer, can be configured to discharge a specific pouch stored in the pouch storage 6, such that a specific pouch stored in the pouch storage 6 (and the object contained therein) may be retrieved. The buffer loops, drives and/or track switches of the pouch storage 6 can be arranged accordingly. In some embodiments, the pouch storage 6 has a maximum input, output and/or throughput of 1500 pouches/hour. In some embodiments, the pouch conveyor can be or comprise the dynamic buffer. In some embodiments, the dynamic buffer may be part of the pouch conveyor. In some embodiments, buffering or storing a pouch may comprise conveying the pouch along or with the pouch conveyor and/or pouch system, e.g. along one or multiple loops. In some embodiments, buffering or storing a pouch may comprise conveying the pouch past the second transfer station 5, without transferring the object.

The first sorter 2 can have a feed station 7, with which objects 14 such as parcels, mail items, shipments, packages, or the like, can be fed to the first sorter 2. The feed station 7 can be configured to feed or load an object (as indicated by the arrow of figure 1) into a first load handling means 12 of the first sorter 2. The first sorter 2 can have a discharge station 8, with which objects 14 conveyed or transported by, or held in or with, the first load handling means 12 can be discharged or removed from the first sorter 2. The discharge station 8 can comprise a chute. The discharge station 8 can be configured to discharge or unload an object (as indicated by the arrow of figure 1) from a first load handling means 12 of the first sorter 2.

The sorter system 1 can comprise a control unit. The control unit can be configured to determine for one, several or each object fed to or conveyed with the first sorter 2 whether the object is to be discharged or transferred to the pouch system 3. If the object is to be discharged, the object can be transported by a first load handling means 12 of the first sorter 2 to a discharge station 8 and discharged. If the object is to be transferred to the pouch system 3, the object can be transported by a first load handling means 12 of the first sorter 2 to the first transfer station 4 and transferred to the pouch system 3 and/or a second load handling means 13 of the pouch system 3. The pouch system 3 can subsequently store the object (and/or the second load handling means 13 holding or accommodating the object) in the pouch storage 6.

The control unit can be configured to determine whether an object (and/or a pouch holding or accommodating an object) stored in the pouch storage is to be retrieved and discharged. If so, the pouch holding the object can be transported to the second transfer station 5, where the object can be transferred to the first sorter 2 and/or a first load handling means 12 of the first sorter 2. Then, the object can be transported to a discharge station 8 and discharged from the first sorter 8.

In some embodiments, an object can be stored in the pouch storage until a condition is fulfilled. The condition can comprise e.g. payment of duties or fees, request for delivery by a sender and/or an addressee, clearance of the object by officials such as police or duty officials, or the like. Alternatively or additionally, the object may be stored in the pouch storage until a specified time interval has elapsed, e.g. until the object has been stored for a specified amount of time, e.g. seven days.

The control unit can be configured to determine whether the object is to be stored in, and/or is to be retrieved from, the pouch storage, or whether the object is to be transferred from the first sorter 2 to the pouch system 3 or vice versa, based on status data of the object. The status data may comprise at least one of, or a combination of, delivery date, delivery destination, sender of the object, e.g. address or identity, addressee of the object, e.g. address or identity, customs data, or package content. The sorter system 1 can have at least one sensor for obtaining the status data. For instance, the sorter system 1 can have a camera, a scanner or a weighing scale. The control unit can compare the status data of the object obtained from the sensor to data in a database.

As an example, the control unit can check whether duties have to be paid for a specific parcel (as e.g. indicated or identified by the identity and/or address of the sender and/or addressee, a tracking number, a QR-Code, barcode or the like), and if so, whether the duty has been paid. If duty is due but not paid, the control unit may determine that the object needs to be stored in the pouch system 3 and or the pouch storage 6, and/or needs to be transferred to the pouch system 3. When the duty has been paid, the object may be clear to be delivered. When the duty has been paid, the control unit may determine that the respective object (as identified as e.g. outlined above) may be discharged from the pouch storage 6, and/or transferred to the first sorter 2, such that the object may be discharged from the first sorter 2, e.g. via a discharge station 8, to be delivered to the addressee.

In another example, the control unit may determine that the content of the object, e.g. the content of a parcel, needs to be examined or opened by authorities such as e.g. customs officials or police. In that case, the object may be stored in the pouch storage until the time of examination, and subsequently discharged at a specific discharge station 8 of the first sorter 2 and/or unloaded via an unloading station 10 of the pouch system 3.

In some other exemplary embodiments, an addressee may request that an object (such as a e.g. a parcel or the like) to be sent to him may be held in the sorter system 1 (or the respective distribution centre having the sorter system 1) for a specified amount of time, e.g. the addressee may request a delivery at a later date. When determining whether the object is to be stored, the control unit can then check the database to take said request into account, and determine whether the object is to be stored. In some embodiments, the control unit may additionally determine how long the object is to be stored. Similarly, the control unit may determine to retrieve or discharge the stored object from the pouch storage for delivery, e.g. when the determined amount of storage time is elapsed or when there is a corresponding request by the addressee.

The examples given above are non-exhaustive, and/or may be combined.

In some embodiments, the control unit may check whether the pouch storage is full when determining whether to store the object. If the storage is full, the control unit may determine not to store the object in the pouch storage, and/or discharge the object via a specific discharge station 8 for further processing or storage in another storage. In some embodiments, the specific discharge station 8 is only used for said purpose or in the event that the storage is full, and not for regular discharging of objects 14.

In some embodiments, the pouch system 3 has an unloading station 10 for unloading or discharging objects 14 from the pouch system 3. In some embodiments, an object stored in the pouch storage 6 is unloaded via the unloading station 10, when it has been stored for longer than a specified amount of time, e.g. longer than a week. Thereby, objects 14 stored longer than the specified time interval are removed from the storage system 1, and/or the pouch system 3 and/or the pouch storage 6. For instance, in case duties and/or possible fees are not paid, the corresponding object, e.g. parcel, is removed from storage such that storage space may be freed up. The unloaded object may then be further processed, e.g. stored in another storage, returned to the sender or destroyed.

The pouch system 3 can have a loading station 9. The loading station 9 can be configured such that an object may be fed or loaded into a second load handling means 13 (pouch) of the pouch system 3. Then, the object can e.g. be stored in the pouch storage 6 or transferred to the second transfer station 5 and/or unloading station 9.

The pouch system 3 can have a pouch buffer 11. The pouch buffer 11 can store empty pouches. The empty pouches can be loaded or filled with the object at the first transfer station 4. In some embodiments, additionally or alternatively, the pouch buffer 11 can store filled pouches, thereby extending the pouch storage 6.

The layout of the sorter system 1, first sorter 2 and/or pouch system 3 can be different from the one shown in figure 1. For example, the first sorter 2 can have one or multiple feed stations 7 and/or discharge stations 8. The one or multiple feed stations 7 and/or discharge stations 8 can be arranged differently. The pouch system 3 can have one or multiple pouch storages 6, loading stations 9, unloading station 10 and/or pouch buffer 11. The one or multiple pouch storages 6, loading stations 9, unloading station 1 and/or pouch buffer 11 can be arranged differently. In some embodiments, the sorter system 1 can have one or multiple first transfer stations 4 and/or second transfer stations 5, one or multiple of which can be arranged differently.

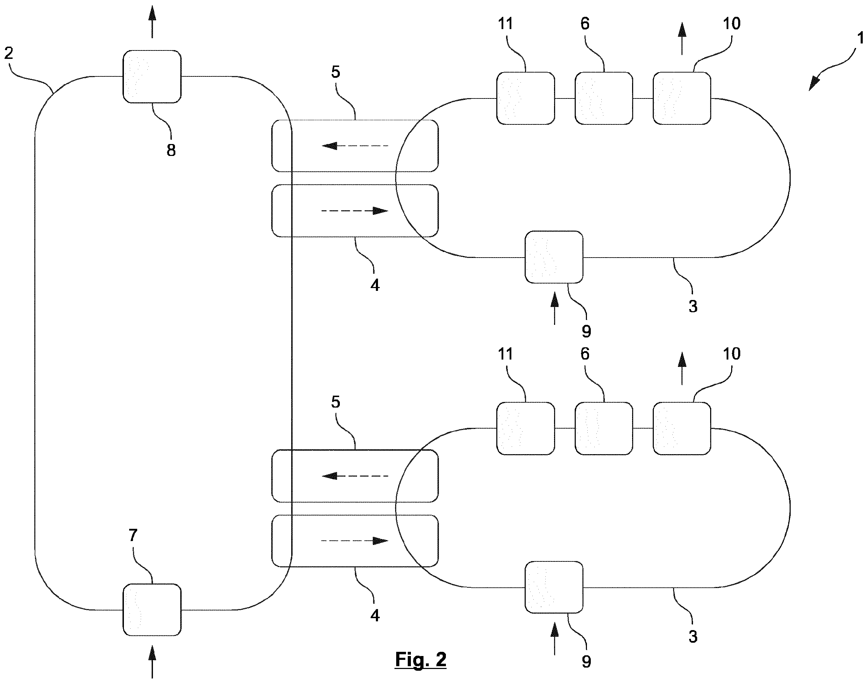

A second embodiment of a sorter system 1 is shown in figure 2. The embodiment shown in figure 2 can have one, more than one or all features and advantages of the embodiment shown in figure 1 and described above.

The sorter system 1 can have a second sorter, e.g. a pouch sorter. Alternatively or additionally, the sorter system 1 can have second pouch system 3, which can be arranged in parallel to the pouch system 3, cf. e.g. figure 2. In some embodiments, the control unit can determine whether to not store (e.g. to discharge) an object fed to the first sorter 2, or whether to store the object in the first pouch system or the second pouch system. The determination can be based on additional criteria. For instance, the first pouch system can be configured to store object for which duty has not been paid, and the second pouch system can be configured to store objects 14 for which the addressee requested a later delivery. In some embodiments, the sorter system 1 can have more than two pouch systems and/or sorters. In some embodiments, the criteria may comprise a e.g. delivery date. For instance, a first pouch system may store objects, for which a delayed delivery with a first delivery date has been requested. The second pouch system may store objects, for which a delayed delivery with a second delivery date has been requested. The second delivery date may be earlier or later than the first delivery date. First and second delivery date may differ by one or more days. In some embodiments, the criteria may comprise one or more of delivery date, delivery destination, sender of the object (14), addressee of the object (14), identity and/or address of sender and/or addressee, customs data, or content, and/or paid duty.

In some embodiments, at least two pouch systems are not arranged in parallel with respect to the first sorter (as sketched in figure 2), but being connected via one or more respective transfer stations to each other. In other word, there may be at least one pouch system, which is connected only via at least one other pouch system to the first sorter, or the lying sorter, respectively.

The sorter system 1 can have a first pouch system and a second pouch system, wherein the sorter system 1 can be configured to transfer objects 14 having a feature and/or fulfilling a criteria to the first pouch sorter, and the sorter system can be configured to transfer objects having a different feature and/or fulfilling a different criteria to the second pouch sorter. The feature and/or different feature can comprises one or more of delivery date, delivery destination, sender of the object, addressee of the object, identity and/or address of sender and/or addressee, customs data, or content. Fulfilling the criteria and/or fulfilling the different criteria can comprise the object matching one or more of delivery date, delivery destination, sender of the object, addressee of the object, identity and/or address of sender and/or addressee, customs data, or content. The sorter system can be configured to check and/or determine whether an object has a feature of fulfills a criteria and can then transfer the object accordingly. For instance, an object may have a feature "delivery date" which can be in date-fomat such as e.g. "yyyy-mm-dd" or the like. If e.g. the date-format matches a determined or specific date-format, the object may fulfil the criteria or have the feature. Two objects having different features may comprise them having the same kind of feature or criteria, but different values of said feature or criteria. For instance, a first object may have the feature "duty paid" with value "false" and a second object may have the feature "duty paid" with value "true", such that the first object may fulfill the criteria whereas the second may not (or vice versa). In that example, the criteria may be "duty paid". Of course, these are just examples, and other features or criteria may be checked, combined or chosen. If the sorter system 1 has more than two pouch systems 3, the objects may be transferred or distributed to the more than two pouch systems accordingly.

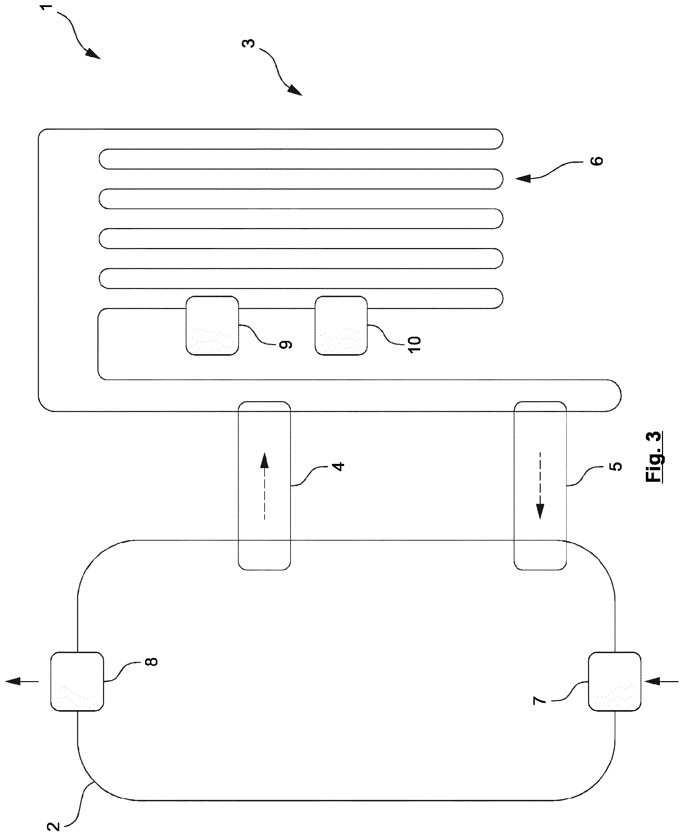

Another exemplary embodiment of a sorter system 1 is shown in figure 3. The embodiment shown in figure 3 can have one, more than one or all features and advantages of the embodiment shown in figure 1 and 2 and described above. Particularly, the first sorter 1 can have two feeding stations 7 and four discharge stations 8. Particularly, the pouch system 3 can have a pouch storage 6, two loading station 9, two unloading station 10 and one pouch buffer 11. Particularly, the sorter system 1 can have one first transfer station 4 and one second transfer station 5.

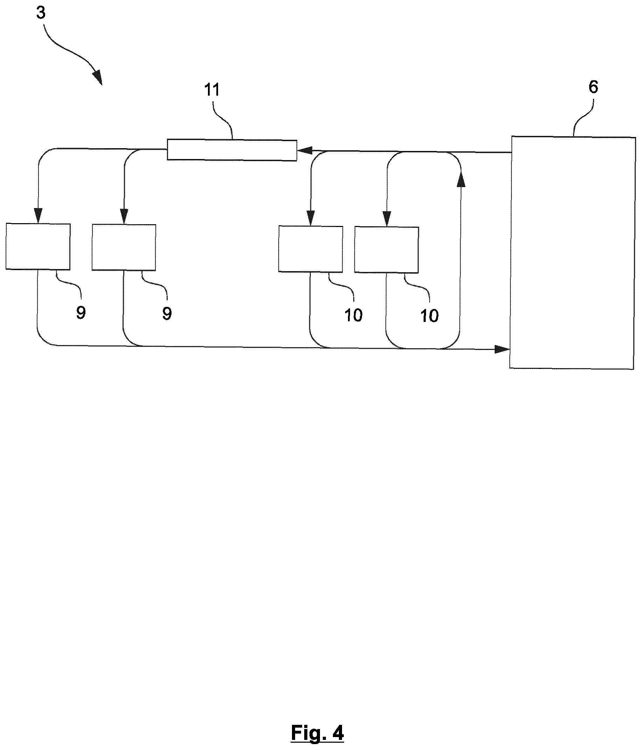

An exemplary layout of a pouch system 3 is shown in figure 4. The pouch system 3 shown in figure 4 can have one, more than one or all features and advantages of the pouch system 3 shown in figure 1, 2 and 3 and described above. As shown, the pouch system 3 can have a pouch storage 6, two loading station 9, two unloading station 10 and one pouch buffer 11. The loading stations 9 may be arranged in parallel. The unloading stations 10 may be arranged in parallel. The pouch buffer 11 may be connected to the loading stations 9, unloading stations 10 and the pouch storage 6. The pouch storage 6 may be connected to the loading stations 9, unloading stations 10 and the pouch buffer 11. The pouch system 3 can have track switches, loops, buffer loops, and drives for driving the second load handling means 13 (pouches).

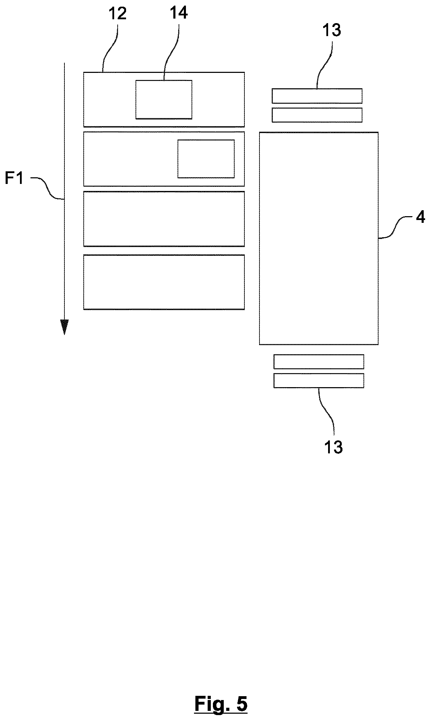

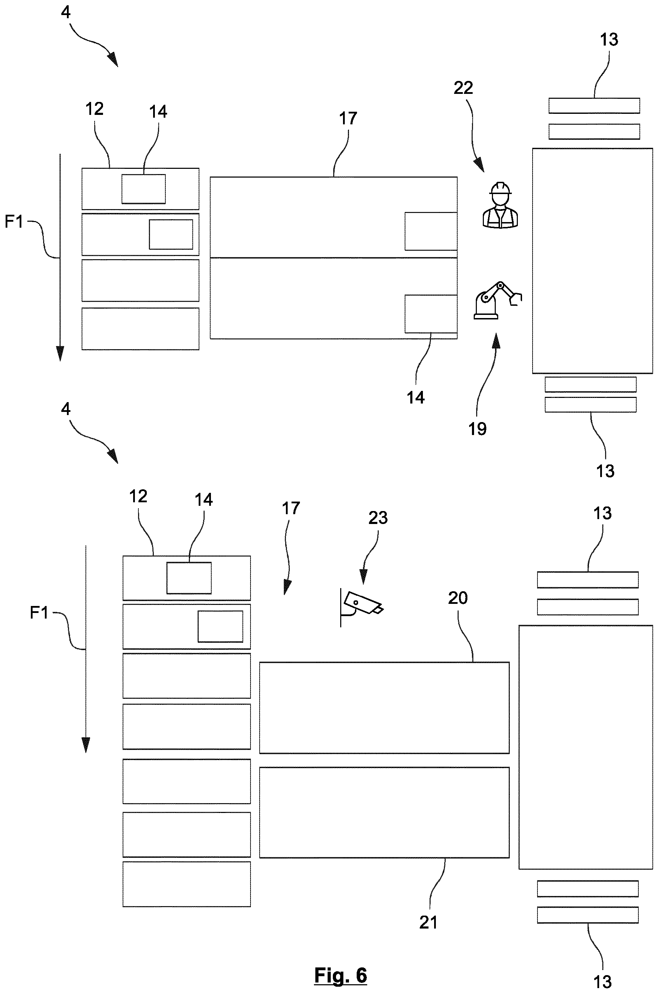

Figures 5 to 7 show exemplary embodiments of first transfer stations 4. As seen e.g. in figure 5, objects 14 can be transported (e.g. in a transport direction F1) by first load handling means 12 of the first sorter 2 to the first transfer station 4, where the objects 14 can be transferred to the pouch system 3.

In some embodiments, the first transfer station can have a first transfer point 17. At the first transfer point 17, the first load handling means 12 of the first sorter 2 can discharge one or more objects 14, which are to be transferred to the pouch system 3. Objects 14 not to be transferred to the pouch system 3 may not be discharged by the first load handling means 12. In some embodiments, the discharged object 14 can then be transferred into or onto a second load handling means 13. For instance, discharged object 14 can be transferred by a robot 19, e.g. a picker robot, an articulated robot or the like. Additionally or alternatively, the discharged object 14 can be transferred by a worker 22. In some embodiments, the discharged object 14 can be transferred additionally or alternatively by a conveyor 20 and/or a chute 21. In some embodiments, first load handling means 12 can be configured to discharge an object 14 onto conveyor 20 and/or chute 21.

The first transfer station 4 can have one or more detectors 23. One or more detectors 23 can be arranged at or near the first transfer point 17. Detector 23 can be configured to identify, determine, check and/or scan an identifier of the object 14. The identifier can be an alphanumeric code, a QR-code, A bar-code, and/or comprise of be stored on an RFID-Chip, or the like. The identifier may be an unique identifier identifying the object 14, its content or status data. In some embodiments, the identifier of an object 14 is detected or scanned by detector 23 to determine whether the object 14 is to be transferred to the pouch system 3. The identifier can be detected or scanned before the object 14 is discharged from the first load handling means 12. Alternatively or additionally, the identifier of an object 14 can be detected or scanned by detector 23 to control the transfer to the second load handling means 13. In some embodiments, controlling the transfer to the second load handling means 13 may comprise adjusting one or more of speed of conveyor 20, speed and/or position of first load handling means 12 and/or second load handling means 13, timing or control of the robot 19, communicating information to the worker 22 (such as e.g. information regarding transfer of the object 14) and/or opening of pouch 15, or the like.

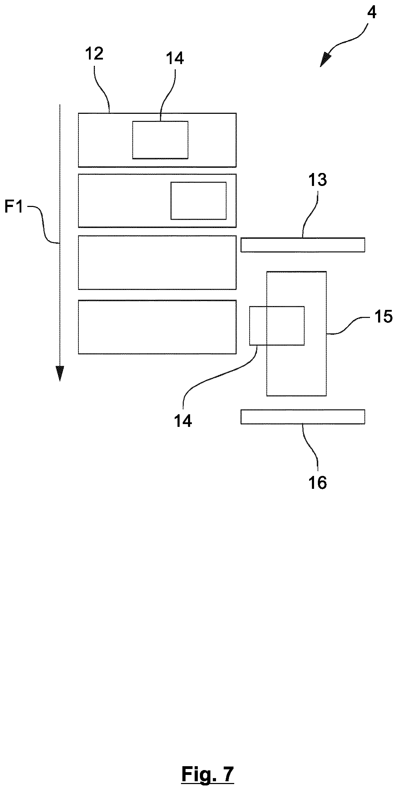

In some embodiments, first sorter 2 and pouch system 3 may be arranged such that in or at the first transfer station 4, the object 14 may be dropped from the first load handling means 12 into or unto the second load handling means 13, as seen e.g. in figure 7. First load handling means 12 and second load handling means 13 can be synchronized such that the object 14 can fall into or onto the second load handling means 13. When the second load handling means 13 comprises a pouch, the pouch 15 may be opened such that the object 14 can fall into pouch 15. When the object 14 is in pouch 15, pouch 15 can be closed, and the closed pouch 16 can then be conveyed, e.g. into pouch storage 6. The first transport station 4 can be configured to open and close pouch 15, 16. When the first load handling means 12 comprises a cross-belt, the cross-belt can be controlled and/or driven such that the object 14 can drop into or onto the second load handling means 13 and/or pouch 15. When the first load handling means 12 comprises a tilt-tray, the tilt-tray can be controlled and/or tilted such that the object 14 can drop into or onto the second load handling means 13 and/or pouch 15.

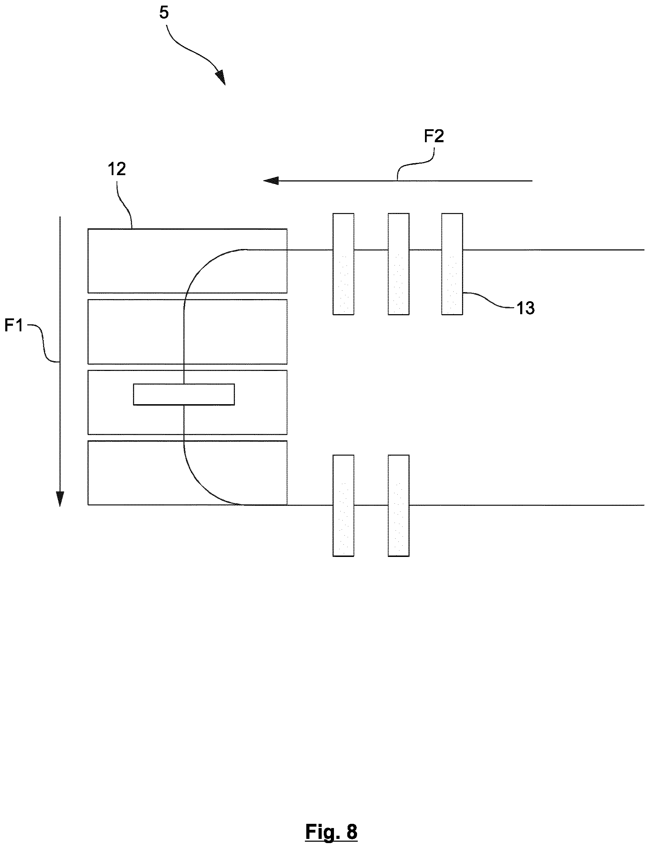

Figures 8 to 10 show exemplary embodiments of a second transport station 5. In some embodiments, first sorter 2 and pouch system 3 may be arranged such that in or at the second transfer station 5, the object 14 may be dropped from the second load handling means 13 into or unto the first load handling means 12, as seen e.g. in figure 8. First load handling means 12 and second load handling means 13 can be synchronized such that the object 14 can fall into or onto the first load handling means 12. When the second load handling means 13 comprises a pouch, the pouch may be opened such that the object 14 can fall or drop from the pouch. For instance, pouches 13 containing objects 14 to be transferred can be conveyed in transport direction F2 towards the first sorter 2 and/or first load handling means 12, as e.g. seen in figure 8. When the pouch 13 is located above a first load handling means 12, in some embodiments a specified or pre-determined load handling means 12, the pouch 13 can be opened. The empty pouch can then be conveyed away from the first sorter 2 and/or first load handling means 12. The second transport station 5 can be configured to open and close pouch 13. When the first load handling means 12 comprises a cross-belt, the second load handling means 13 and/or cross-belt can be controlled and/or driven such that the object 14 can drop into or onto the cross-belt. When the first load handling means 12 comprises a tilt-tray, the second load handling means 13 and/or tilt-tray can be controlled and/or driven such that the object 14 can drop into or onto the tilt-tray.

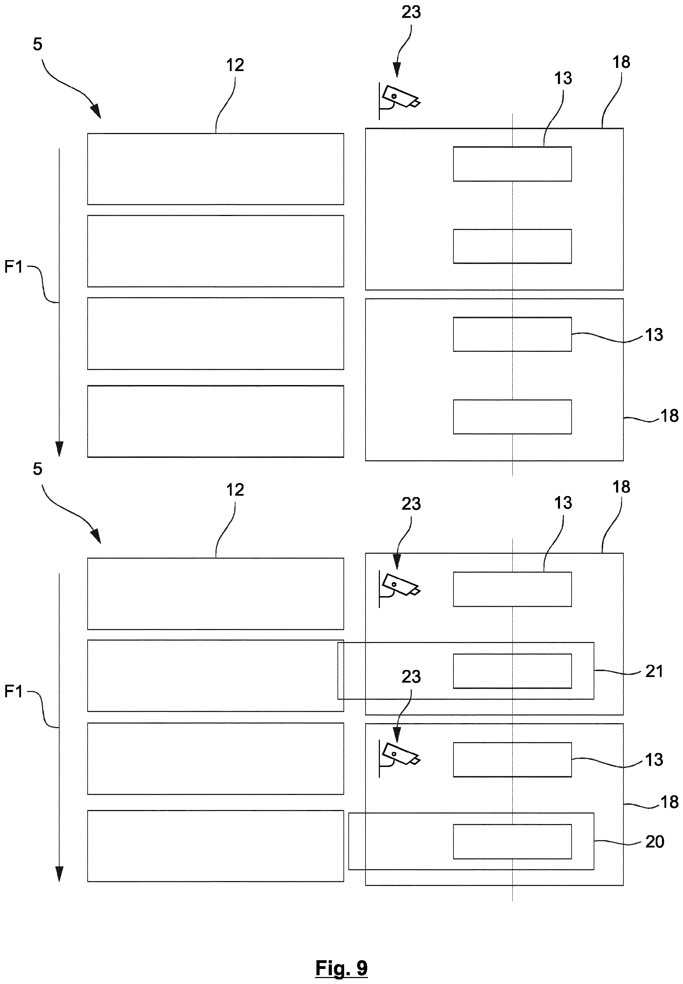

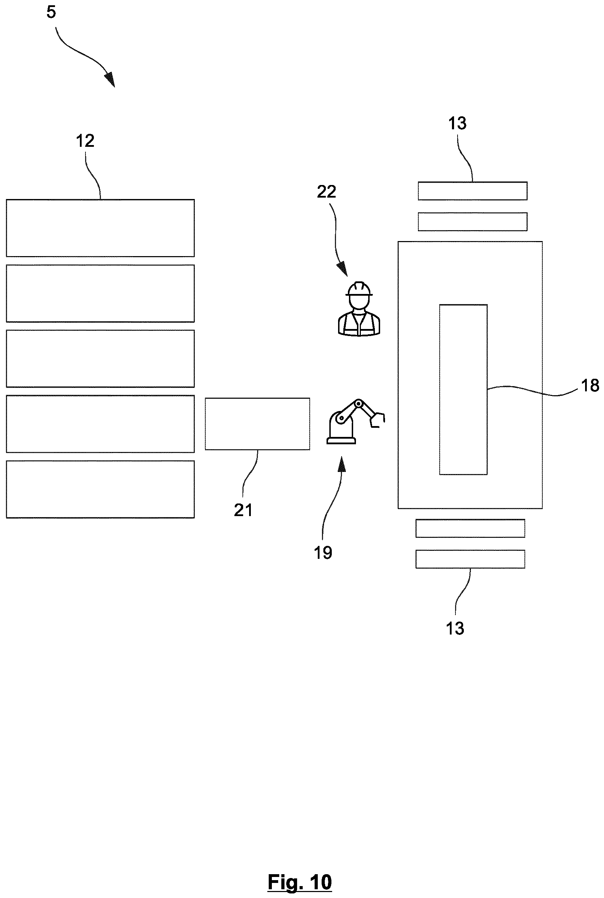

In some embodiments, the second transfer station 5 can have a second transfer point 18. At the second transfer point 18, the second load handling means 13 of the pouch system 3 can discharge one or more objects 14, which are to be transferred to the first sorter 2. Objects 14 not to be transferred to the first sorter 2 may not be discharged by the second load handling means 13. In some embodiments, the discharged object 14 can then be transferred into or onto a first load handling means 12. For instance, discharged object 14 can be transferred by a robot 19, e.g. a picker robot, an articulated robot or the like, as shown e.g. in figure 10. Additionally or alternatively, the discharged object 14 can be transferred by a worker 22. In some embodiments, the discharged object 14 can be transferred additionally or alternatively by a conveyor 20 and/or a chute 21, as seen e.g. in figure 9. In some embodiments, second load handling means 13 can be configured to discharge an object 14 onto conveyor 20 and/or chute 21.

The second transfer station 5 can have one or more detectors 23. One or more detectors 23 can be arranged at or near the second transfer point 18. Detector 23 can be configured to identify, determine, check and/or scan an identifier of the object 14. The identifier can be an alphanumeric code, a QR-code, A bar-code, and/or comprise of be stored on an RFID-Chip, or the like. The identifier may be an unique identifier identifying the object 14, its content or status data. In some embodiments, the identifier of an object 14 is detected or scanned by detector 23 to determine whether the object 14 is to be transferred to the first sorter 2. The identifier can be detected or scanned before the object 14 is discharged from the second load handling means 13. Alternatively or additionally, the identifier of an object 14 can be detected or scanned by detector 23 to control the transfer to the first load handling means 12. In some embodiments, controlling the transfer to the first load handling means 12 may comprise adjusting one or more of speed of conveyor 20, speed and/or position of first load handling means 12 and/or second load handling means 13, timing or control of the robot 19, communicating information to the worker 22 (such as e.g. information regarding transfer of the object 14) and/or opening of pouch 15, or the like. As shown e.g. in figure 10, the object 14 can be transferred to e.g. a conveyor 20 (and/or a chute 20, not shown in figure 10), e.g. by robot 19 or worker 22, before being transferred to the first load handling means 12.

The embodiments as shown in the figures are only exemplary. A first transfer station 4 can have one or more of first transfer point 17, robot 19, conveyor 20, chute 21, worker 22, camera 23, and/or any combination thereof. A second transfer station 5 can have one or more of second transfer point 18, robot 19, conveyor 20, chute 21, worker 22, camera 23, and/or any combination thereof.

### List of reference numerals:

- 1: sorter system
- 2: first sorter
- 3: pouch system
- 4: first transfer station
- 5: second transfer station
- 6: pouch storage
- 7: feed station
- 8: discharge station
- 9: loading station
- 10: unloading station
- 11: pouch buffer
- 12: first load handling means
- 13: second load handling means
- 14: object
- 15: pouch
- 16: pouch
- 17: first transfer point
- 18: second transfer point
- 19: robot
- 20: conveyor
- 21: chute
- 22: worker
- 23: camera

- F1: conveying direction
- F2: conveying direction

## Claims

1. Sorter system (1) for sorting objects (14), particularly parcels or mail items, the sorter system (1) having a first sorter (2) with a multiplicity of first load handling means (12) for objects (14) to be conveyed or sorted, the sorter system (1) having a pouch system (3) with a multiplicity of second load handling means (13) for objects (14) to be conveyed and/or stored or buffered , the sorter system (1) having a first transfer station (4) which is configured to transfer objects (14) from the first load handling means (12) of the first sorter (2) to the second load handling means (13) of the pouch system (3), , wherein the first sorter (2) is or comprises a lying sorter, preferably a cross-belt sorter or a tilt-tray sorter, and the second load handling (13) means being or comprising pouches (15, 16), **characterized in that** the pouch system (3) is or comprises a pouch conveyor, wherein the pouch system (3) has a pouch storage for storing pouches, such that objects (14) held by pouches are storable in the pouch storage.

2. The sorter system (1) of claim 1, the sorter system (1) comprising a second sorter, preferably a pouch sorter, and/or second pouch system.

3. The sorter system (1) of any of the preceding claims, the sorter system (1) having at least one second pouch system (3), the sorter system (1) being configured to transfer objects (14) having a feature and/or fulfilling a criteria to the pouch system (3), and the sorter system (1) being configured to transfer objects (14) having a different feature and/or fulfilling a different criteria to the second pouch system (3), wherein preferably the feature comprises one or more of delivery date, delivery destination, sender of the object (14), addressee of the object (14), identity and/or address of sender and/or addressee, customs data, or content and/or preferably fulfilling a criteria comprises the object matching one or more of delivery date, delivery destination, sender of the object (14), addressee of the object (14), identity and/or address of sender and/or addressee, customs data, or content.

4. The sorter system (1) of any of the preceding claims, the sorter system (1) having a second transfer station (5) which is configured to transfer objects (14) from the second load handling means (13) of the pouch system (3) to the first load handling means (12) of the first sorter (2).

5. The sorter system (1) of any of the preceding claims, wherein the sorter system (1) has a control unit which is configured to determine whether an object (14) conveyed by a first load handling means (12) of the first sorter (2) is to be transferred, with the first transfer station (4), to a second load handling means (13) of the pouch system (3) or to be discharged from the first sorter (2).

6. The sorter system (1) of claim 5, wherein the control unit is further configured to determine whether an object (14) conveyed by a second load handling means (13) of the pouch system (3) or stored in the pouch storage is to be transferred, preferably with the second transfer station (5), to a first load handling (12) means of the first sorter (2).

7. The sorter system (1) of any of the preceding claims, wherein the pouch system (3) has a loading station to load objects (14) into the second load handling means (13), and/or wherein the pouch system (3) has an unloading station for unloading or discharging objects (14) from the second load handling means (13).

8. The sorter system (1) of any of the preceding claims, wherein the pouch storage has at least one dynamic buffer, wherein preferably the dynamic buffer has more than one buffer loop.

9. The sorter system (1) of any of the preceding claims, wherein
- in or at the first transfer station (4), the first sorter (2) and the pouch system (3) are arranged such that an object (14) discharged by a first load handling means (12) is directly transferable to a second load handling means (13), preferably directly falling into a pouch; and/or
- the first transfer station (4) has a first transfer point (17), onto which an object (14) conveyed by a first load handling means (12) is dischargeable by the first load handling means (12), such that the object (14) is transferable from the first transfer point (17) into or onto a second load handling means (13) by a robot (19), a conveyor (20), a chute (21) and/or a worker (22).

10. The sorter system (1) of any of the preceding claims 4 to 9, wherein
- in or at the second transfer station (5), the first sorter (2) and the pouch system (3) are arranged such that an object (14) discharged by a second load handling (13) means is directly transferable to a first load handling means (12), preferably directly falling into or onto a tray or cross-belt; and/or
- The second transfer station (5) has a second transfer point (18), onto which an object (14) conveyed by a second load handling means (13) is dischargeable by the second load handling means (13), such that the object (14) is transferable from the first transfer point (18) into or onto a second load handling means (13) by a robot (19), a conveyor (20), a chute (21) and/or a worker (22).

11. The sorter system (1) of claim 9 or 10, wherein the first transfer station (5) and/or the second transfer station (6) has a detector, preferably a camera, which is configured to identify, check and/or track an object (14) transferred in, at or by the first transfer station (5) and/or the second transfer station (6).

12. Method for sorting objects (14), particularly parcels or mail items, the method comprising the steps:
- feeding an object (14) to a first sorter (2) of a sorter system (1);
- determining whether the object (14) is an object (14) to be buffered;
- when the object (14) is determined to be not an object (14) to be buffered, discharging the object (14) at an end point of the first sorter (2); and
- when the object (14) is determined to be an object (14) to be buffered, the method comprising the steps:
- transferring the object (14) from the first sorter (2) to a pouch system (3) of the sorter system (1) ;
- buffering the object (14) in the pouch system (3);
- either transferring the object (14) from the pouch system (3) to the first sorter (2) and discharging the object (14) at the end point of the first sorter (2), or unloading the object (14) from the pouch system (3);
wherein the first sorter (2) is or comprises a lying sorter, and the pouch system (3) comprises or is a pouch conveyor having pouches for conveying or holding the object (14).

13. The method of claim 12, wherein buffering the object (14) in the pouch system (3) comprises storing the object (14) in a pouch storage or a pouch buffer.

14. The method of any of the preceding claims 12 to 13, wherein determining whether the object (14) is an object (14) to be buffered comprises checking status data of the object (14), the status data preferably comprising at least one of delivery date, delivery destination, sender of the object (14), addressee of the object (14), customs data, or package content.

15. The method of any of the preceding claims 12 to 14, wherein buffering the object (14) in the pouch system (3) comprises buffering the object (14) for a specified time interval and/or until a condition is fulfilled, wherein preferably checking whether the condition is fulfilled comprises checking status data of the object (14), the status data preferably comprising at least one of delivery date, delivery destination, sender of the object (14), addressee of the object (14), identity and/or address of sender and/or addressee, customs data, or content.

16. The method of claim 15, wherein the object (14) is transferred to the first sorter (2), when the condition is fulfilled, and/or wherein the object (14) is unloaded, when the specified time interval is elapsed and the condition is not fulfilled.

17. The method of any of the preceding claims 12 to 16, wherein a second object (14) is loaded into the pouch system (3) with a loading station of the pouch system (3), and, after loading the second object (14) into the pouch system (3), the second object (14) either being buffered in the pouch system (3) or being transferred to the first sorter (2) with a second transfer station (5).

18. The method of any of the preceding claims 12 to 17, wherein transferring the object (14) from the first sorter (2) to the pouch system (3) comprises
- directly transferring the object (14) from a first load handling means (12) of the first sorter (2) into or onto a second load handling means (13) of the pouch system (3) by dropping it into the second load handling means (13); and/or
- discharging the object (14) at a transfer point (17) of a first transfer station (4) from a first load handling means (12) of the first sorter (2), and transferring the object (14) by a robot (19), conveyor (20), chute (21) and/or worker (22) to a second load handling means (13) of the pouch system (3).

19. The method of any of the preceding claims 12 to 18, wherein transferring the object (14) from the pouch system (3) to the first sorter (2) comprises
- directly transferring the object (14) from a second load handling means (13) of the pouch system (3) into or onto a first load handling means (12) of the first sorter (2) by dropping it into the second load handling means (13); and/or
- discharging the object (14) at a transfer point (18) of a second transfer station (5) from a second load handling means (13) of the pouch system (3), and transferring the object (14) by a robot (19), conveyor (20), chute (21) and/or worker (22) to a first load handling means (12) of the first sorter (2).

## Patentansprüche

1. Sortiersystem (1) zum Sortieren von Gegenständen (14), insbesondere Paketen oder Postsendungen, wobei das Sortiersystem (1) einen ersten Sortierer (2) mit einer Vielzahl von ersten Lastaufnahmemitteln (12) für zu fördernde oder zu sortierende Gegenstände (14) aufweist, wobei das Sortiersystem (1) ein Taschensystem (3) mit einer Vielzahl von zweiten Lastaufnahmemitteln (13) für zu fördernde und/oder zu lagernde oder zu puffernde Gegenstände (14) aufweist, wobei das Sortiersystem (1) eine erste Übergabestation (4) aufweist, die dazu eingerichtet ist, Gegenstände (14) von den ersten Lastaufnahmemitteln (12) des ersten Sortierers (2) an die zweiten Lastaufnahmemittel (13) des Taschensystems (3) zu übergeben, wobei der erste Sortierer (2) ein Liegesortierer, vorzugsweise ein Kreuzbandsortierer oder ein Kippschalensortierer, ist oder aufweist und die zweiten Lastaufnahmemittel (13) Taschen (15, 16) sind oder aufweisen, **dadurch gekennzeichnet, dass** das Taschensystem (3) ein Taschenförderer ist oder einen solchen aufweist, wobei das Taschensystem (3) einen Taschenspeicher zum Lagern von Taschen aufweist, so dass von Taschen gehaltene Gegenstände (14) in dem Taschenspeicher lagerbar sind.

2. Sortiersystem (1) nach Anspruch 1, wobei das Sortiersystem (1) einen zweiten Sortierer, vorzugsweise einen Taschensortierer, und/oder ein zweites Taschensystem aufweist.

3. Sortiersystem (1) nach einem der vorhergehenden Ansprüche, wobei das Sortiersystem (1) mindestens ein zweites Taschensystem (3) aufweist, wobei das Sortiersystem (1) dazu eingerichtet ist, Gegenstände (14), die ein Merkmal aufweisen und/oder ein Kriterium erfüllen, an das Taschensystem (3) zu übergeben, und wobei das Sortiersystem (1) dazu eingerichtet ist, Gegenstände (14), die ein anderes Merkmal aufweisen und/oder ein anderes Kriterium erfüllen, an das zweite Taschensystem (3) zu übergeben, wobei vorzugsweise das Merkmal eines oder mehrere von Lieferdatum, Lieferziel, Absender des Gegenstands (14), Adressat des Gegenstands (14), Identität und/oder Adresse von Absender und/oder Adressat, Zolldaten oder Inhalt aufweist und/oder vorzugsweise das Erfüllen eines Kriteriums aufweist, dass der Gegenstand mit einem oder mehreren von Lieferdatum, Lieferziel, Absender des Gegenstands (14), Adressat des Gegenstands (14), Identität und/oder Adresse von Absender und/oder Adressat, Zolldaten oder Inhalt übereinstimmt.

4. Sortiersystem (1) nach einem der vorhergehenden Ansprüche, wobei das Sortiersystem (1) eine zweite Übergabestation (5) aufweist, die dazu eingerichtet ist, Gegenstände (14) von dem zweiten Lastaufnahmemittel (13) des Taschensystems (3) an das erste Lastaufnahmemittel (12) des ersten Sortierers (2) zu übergeben.

5. Sortiersystem (1) nach einem der vorhergehenden Ansprüche, wobei das Sortiersystem (1) eine Steuereinheit aufweist, die dazu eingerichtet ist, zu bestimmen, ob ein von einem ersten Lastaufnahmemittel (12) des ersten Sortierers (2) geförderter Gegenstand (14) mit der ersten Übergabestation (4) an ein zweites Lastaufnahmemittel (13) des Taschensystems (3) übergeben oder aus dem ersten Sortierer (2) ausgeschleust werden soll.

6. Sortiersystem (1) nach Anspruch 5, wobei die Steuereinheit ferner dazu eingerichtet ist, zu bestimmen, ob ein von einem zweiten Lastaufnahmemittel (13) des Taschensystems (3) geförderter oder in dem Taschenlager gelagerter Gegenstand (14), vorzugsweise mit der zweiten Übergabestation (5), an ein erstes Lastaufnahmemittel (12) des ersten Sortierers (2) übergeben werden soll.

7. Sortiersystem (1) nach einem der vorhergehenden Ansprüche, wobei das Taschensystem (3) eine Ladestation zum Laden von Gegenständen (14) in das zweite Lastaufnahmemittel (13) aufweist, und/oder wobei das Taschensystem (3) eine Entladestation zum Entladen oder Ausschleusen von Gegenständen (14) aus dem zweiten Lastaufnahmemittel (13) aufweist.

8. Sortiersystem (1) nach einem der vorhergehenden Ansprüche, wobei das Taschenlager mindestens einen dynamischen Puffer aufweist, wobei vorzugsweise der dynamische Puffer mehr als eine Pufferschleife aufweist.

9. Sortiersystem (1) nach einem der vorhergehenden Ansprüche, wobei
- in oder an der ersten Übergabestation (4) der erste Sortierer (2) und das Taschensystem (3) derart angeordnet sind, dass ein von einem ersten Lastaufnahmemittel (12) ausgeschleuster Gegenstand (14) direkt an ein zweites Lastaufnahmemittel (13) übergebbar ist, vorzugsweise direkt in eine Tasche fällt; und/oder
- die erste Übergabestation (4) eine erste Übergabestelle (17) aufweist, auf die ein von einem ersten Lastaufnahmemittel (12) geförderter Gegenstand (14) von dem ersten Lastaufnahmemittel (12) ausschleusbar ist, derart, dass der Gegenstand (14) von einem Roboter (19), einem Förderer (20), einer Rutsche (21) und/oder einem Werker (22) von der ersten Übergabestelle (17) in oder auf ein zweites Lastaufnahmemittel (13) übergebbar ist.

10. Sortiersystem (1) nach einem der vorhergehenden Ansprüche 4 bis 9, wobei
- in oder an der zweiten Übergabestation (5) der erste Sortierer (2) und das Taschensystem (3) derart angeordnet sind, dass ein von einem zweiten Lastaufnahmemittel (13) ausgeschleuster Gegenstand (14) direkt an ein erstes Lastaufnahmemittel (12) übergebbar ist, vorzugsweise direkt in oder auf eine Schale oder ein Querband fällt; und/oder
- die zweite Übergabestation (5) eine zweite Übergabestelle (18) aufweist, auf die ein von einem zweiten Lastaufnahmemittel (13) geförderter Gegenstand (14) von dem zweiten Lastaufnahmemittel (13) ausschleusbar ist, derart, dass der Gegenstand (14) von einem Roboter (19), einem Förderer (20), einer Rutsche (21) und/oder einem Werker (22) von der ersten Übergabestelle (18) in oder auf ein zweites Lastaufnahmemittel (13) übergebbar ist.

11. Sortiersystem (1) nach Anspruch 9 oder 10, wobei die erste Übergabestation (5) und/oder die zweite Übergabestation (6) einen Detektor, vorzugsweise eine Kamera, aufweist, der dazu ausgebildet ist, einen in, an oder von der ersten Übergabestation (5) und/oder der zweiten Übergabestation (6) übergebenen Gegenstand (14) zu identifizieren, zu überprüfen und/oder zu verfolgen.

12. Verfahren zum Sortieren von Gegenständen (14), insbesondere Paketen oder Postsendungen, mit den Schritten:
- Zuführen eines Gegenstands (14) zu einem ersten Sortierer (2) eines Sortiersystems (1);
- Bestimmen, ob der Gegenstand (14) ein zu puffernder Gegenstand (14) ist;
- wenn bestimmt wird, dass der Gegenstand (14) kein zu puffernder Gegenstand (14) ist, Entladen des Gegenstands (14) an einem Endpunkt des ersten Sortierers (2); und
- wenn bestimmt wird, dass der Gegenstand (14) ein zu puffernder Gegenstand (14) ist, mit den Schritten:
- Überführen des Gegenstands (14) von dem ersten Sortierer (2) zu einem Taschensystem (3) des Sortiersystems (1);
- Puffern des Gegenstands (14) in dem Taschensystem (3);
- entweder Überführen des Gegenstands (14) von dem Taschensystem (3) zu dem ersten Sortierer (2) und Entladen des Gegenstands (14) an dem Endpunkt des ersten Sortierers (2) oder Entladen des Gegenstands (14) von dem Taschensystem (3);
wobei der erste Sortierer (2) ein Liegesortierer ist oder umfasst und das Taschensystem (3) einen Taschenförderer mit Taschen zum Fördern oder Halten des Gegenstands (14) umfasst oder ist.

13. Verfahren nach Anspruch 12, wobei das Puffern des Gegenstands (14) in dem Taschensystem (3) das Lagern des Gegenstands (14) in einem Taschenlager oder einem Taschenpuffer umfasst.

14. Verfahren nach einem der vorhergehenden Ansprüche 12 bis 13, wobei das Bestimmen, ob der Gegenstand (14) ein zu puffernder Gegenstand (14) ist, das Prüfen von Statusdaten des Gegenstands (14) umfasst, wobei die Statusdaten vorzugsweise mindestens eines von Lieferdatum, Lieferziel, Absender des Gegenstands (14), Adressat des Gegenstands (14), Zolldaten oder Paketinhalt umfassen.

15. Verfahren nach einem der vorhergehenden Ansprüche 12 bis 14, wobei das Puffern des Gegenstands (14) in dem Taschensystem (3) das Puffern des Gegenstands (14) für ein bestimmtes Zeitintervall und/oder bis eine Bedingung erfüllt ist, umfasst, wobei vorzugsweise das Prüfen, ob die Bedingung erfüllt ist, das Prüfen von Statusdaten des Gegenstands (14) umfasst, wobei die Statusdaten vorzugsweise mindestens eines von Lieferdatum, Lieferziel, Absender des Gegenstands (14), Adressat des Gegenstands (14), Identität und/oder Adresse von Absender und/oder Adressat, Zolldaten oder Inhalt umfassen.

16. Verfahren nach Anspruch 15, wobei der Gegenstand (14) zu dem ersten Sortierer (2) transferiert wird, wenn die Bedingung erfüllt ist, und/oder wobei der Gegenstand (14) entladen wird, wenn das bestimmte Zeitintervall verstrichen ist und die Bedingung nicht erfüllt ist.

17. Verfahren nach einem der vorhergehenden Ansprüche 12 bis 16, wobei ein zweiter Gegenstand (14) mit einer Ladestation des Taschensystems (3) in das Taschensystem (3) geladen wird, und wobei nach dem Laden des zweiten Gegenstands (14) in das Taschensystem (3) der zweite Gegenstand (14) entweder in dem Taschensystem (3) gepuffert wird oder mit einer zweiten Übergabestation (5) zu dem ersten Sortierer (2) transferiert wird.

18. Verfahren nach einem der vorhergehenden Ansprüche 12 bis 17, wobei das Transferieren des Gegenstands (14) von dem ersten Sortierer (2) zu dem Taschensystem (3) umfasst
- direktes Transferieren des Gegenstands (14) von einem ersten Lastaufnahmemittel (12) des ersten Sortierers (2) in oder auf ein zweites Lastaufnahmemittel (13) des Taschensystems (3) durch Fallenlassen desselben in das zweite Lastaufnahmemittel (13); und/oder
- Entladen des Gegenstands (14) an einer Übergabestelle (17) einer ersten Übergabestation (4) von einem ersten Lastaufnahmemittel (12) des ersten Sortierers (2) und Transferieren des Gegenstands (14) von einem Roboter (19), einem Förderer (20), einer Rutsche (21) und/oder einem Werker (22) zu einem zweiten Lastaufnahmemittel (13) des Taschensystems (3).

19. Verfahren nach einem der vorhergehenden Ansprüche 12 bis 18, wobei das Transferieren des Gegenstands (14) von dem Taschensystem (3) zu dem ersten Sortierer (2) umfasst
- direktes Transferieren des Gegenstands (14) von einem zweiten Lastaufnahmemittel (13) des Taschensystems (3) in oder auf ein erstes Lastaufnahmemittel (12) des ersten Sortierers (2) durch Fallenlassen desselben in das zweite Lastaufnahmemittel (13); und/oder
- Entladen des Gegenstands (14) an einer Übergabestelle (18) einer zweiten Übergabestation (5) von einem zweiten Lastaufnahmemittel (13) des Taschensystems (3) und Transferieren des Gegenstands (14) von einem Roboter (19), einem Förderer (20), einer Rutsche (21) und/oder einem Werker (22) zu einem ersten Lastaufnahmemittel (12) des ersten Sortierers (2).

## Revendications

1. Système de tri (1) pour trier des objets (14), en particulier des colis ou des articles de courrier, le système de tri (1) comportant un premier trieur (2) avec une pluralité de premiers moyens de manutention de charge (12) pour les objets (14) à transporter ou à trier, le système de tri (1) comportant un système à pochettes (3) avec une pluralité de deuxièmes moyens de manutention de charge (13) pour les objets (14) à transporter et/ou à stocker ou à mettre en stock-tampon, le système de tri (1) comportant une première station de transfert (4) qui est configurée pour transférer des objets (14) depuis les premiers moyens de manutention de charge (12) du premier trieur (2) aux deuxièmes moyens de manutention de charge (13) du système à pochettes (3), dans lequel le premier trieur (2) est ou comprend un trieur à plat, de préférence un trieur à bandes croisées ou un trieur à plateaux inclinés, et les deuxièmes moyens de manutention de charge (13) étant ou comprenant des pochettes (15, 16), **caractérisé en ce que** le système à pochettes (3) est ou comprend un convoyeur à pochettes, dans lequel le système à pochettes (3) comporte un stockage à pochettes pour stocker des pochettes, de telle sorte que les objets (14) maintenus par les pochettes peuvent être stockés dans le stockage à pochettes.

2. Système de tri (1) selon la revendication 1, le système de tri (1) comprenant un deuxième trieur, de préférence un trieur à pochettes, et/ou un deuxième système à pochettes.

3. Système de tri (1) selon l'une quelconque des revendications précédentes, le système de tri (1) comportant au moins un deuxième système à pochettes (3), le système de tri (1) étant configuré pour transférer des objets (14) comportant une caractéristique et/ou remplissant un critère au système à pochettes (3), et le système de tri (1) étant configuré pour transférer des objets (14) ayant une caractéristique différente et/ou remplissant un critère différent vers le deuxième système à pochettes (3), la caractéristique comprenant de préférence l'un ou plusieurs parmi la date de livraison, la destination de livraison, l'expéditeur de l'objet (14), le destinataire de l'objet (14), l'identité et/ou l'adresse de l'expéditeur et/ou du destinataire, les données douanières ou le contenu et/ou remplissant de préférence un critère comprenant l'objet correspondant à l'un ou plusieurs parmi la date de livraison, la destination de livraison, l'expéditeur de l'objet (14), le destinataire de l'objet (14), l'identité et/ou l'adresse de l'expéditeur et/ou du destinataire, les données douanières ou le contenu.

4. Système de tri (1) selon l'une quelconque des revendications précédentes, le système de tri (1) comportant une deuxième station de transfert (5) qui est configurée pour transférer des objets (14) provenant des deuxièmes moyens de manutention de charge (13) du système à pochettes (3) vers les premiers moyens de manutention de charge (12) du premier trieur (2).

5. Système de tri (1) selon l'une quelconque des revendications précédentes, dans lequel le système de tri (1) comporte une unité de commande qui est configurée pour déterminer si un objet (14) transporté par un premier moyen de manutention de charge (12) du premier trieur (2) doit être transféré, avec la première station de transfert (4), vers un deuxième moyen de manutention de charge (13) du système à pochettes (3) ou être déchargé du premier trieur (2).

6. Système de tri (1) selon la revendication 5, dans lequel l'unité de commande est en outre configurée pour déterminer si un objet (14) transporté par un deuxième moyen de manutention de charge (13) du système à pochettes (3) ou stocké dans le stockage à pochettes doit être transféré, de préférence avec la deuxième station de transfert (5), vers un premier moyen de manutention de charge (12) du premier trieur (2).

7. Système de tri (1) selon l'une quelconque des revendications précédentes, dans lequel le système à pochettes (3) comporte une station de chargement pour charger des objets (14) dans le deuxième moyen de manutention de charge (13), et/ou dans lequel le système à pochettes (3) comporte une station de déchargement pour décharger ou décharger des objets (14) depuis le deuxième moyen de manutention de charge (13).

8. Système de tri (1) selon l'une quelconque des revendications précédentes, dans lequel le stockage à pochettes comporte au moins une attente dynamique, l'attente dynamique comportant de préférence plus d'une boucle attente.

9. Système de tri (1) selon l'une quelconque des revendications précédentes, dans lequel
- dans ou au niveau du premier poste de transfert (4), le premier trieur (2) et le système à pochettes (3) sont disposés de telle sorte qu'un objet (14) déchargé par un premier moyen de manutention de charge (12) est directement transférable vers un deuxième moyen de manutention de charge (13), tombant de préférence directement dans une pochette ; et/ou
- la première station de transfert (4) comporte un premier point de transfert (17), sur lequel un objet (14) transporté par un premier moyen de manutention de charge (12) peut être déchargé par le premier moyen de manutention de charge (12), de telle sorte que l'objet (14) est transférable depuis le premier point de transfert (17) dans ou sur un deuxième moyen de manutention de charge (13) par un robot (19), un convoyeur (20), une goulotte (21) et/ou un travailleur (22).

10. Système de tri (1) selon l'une quelconque des revendications 4 à 9, dans lequel
- dans ou au niveau de la deuxième station de transfert (5), le premier trieur (2) et le système à pochettes (3) sont disposés de telle sorte qu'un objet (14) déchargé par un deuxième moyen de manutention de charge (13) est directement transférable vers un premier moyen de manutention de charge (12), tombant de préférence directement dans ou sur un plateau ou un transporteur ; et/ou
- la deuxième station de transfert (5) comporte un deuxième point de transfert (18), sur lequel un objet (14) transporté par un deuxième moyen de manutention de charge (13) peut être déchargé par le deuxième moyen de manutention de charge (13), de telle sorte que l'objet (14) est transférable depuis le premier point de transfert (18) dans ou sur un deuxième moyen de manutention de charge (13) par un robot (19), un convoyeur (20), une goulotte (21) et/ou un travailleur (22).

11. Système de tri (1) selon la revendication 9 ou 10, dans lequel la première station de transfert (5) et/ou la deuxième station de transfert (6) comporte un détecteur, de préférence une caméra, qui est configuré pour identifier, vérifier et/ou suivre un objet (14) transféré dans, au niveau de ou par la première station de transfert (5) et/ou la deuxième station de transfert (6).

12. Procédé de tri d'objets (14), notamment de colis ou d'articles de courrier, le procédé comprenant les étapes suivantes :
- introduction d'un objet (14) dans un premier trieur (2) d'un système de tri (1) ;
- détermination du fait que l'objet (14) est un objet (14) à mettre en stock-tampon ;
- lorsque l'objet (14) est déterminé comme n'étant pas un objet (14) à mettre en stock-tampon, décharger l'objet (14) à un point d'extrémité du premier trieur (2) ; et
- lorsque l'objet (14) est déterminé comme étant un objet (14) à mettre en stock-tampon, le procédé comprenant les étapes de :
- transfert de l'objet (14) depuis le premier trieur (2) vers un système à pochettes (3) du système de tri (1) ;
- mise en stock-tampon de l'objet (14) dans le système à pochettes (3) ;
- soit transfert de l'objet (14) depuis le système à pochettes (3) vers le premier trieur (2) et le déchargement de l'objet (14) au point final du premier trieur (2), soit déchargement de l'objet (14) du système à pochettes (3) ;
dans lequel le premier trieur (2) est ou comprend un trieur à plat, et le système à pochettes (3) comprend ou est un convoyeur à pochettes comportant des pochettes pour transporter ou maintenir l'objet (14).

13. Procédé selon la revendication 12, dans lequel la mise en stock-tampon de l'objet (14) dans le système à pochettes (3) comprend le stockage de l'objet (14) dans un stockage à pochettes ou un stock-tampon de pochettes.

14. Procédé selon l'une quelconque des revendications précédentes 12 à 13, dans lequel la détermination du fait que l'objet (14) est ou non un objet (14) à mettre en stock-tampon comprend la vérification des données d'état de l'objet (14), les données d'état comprenant de préférence au moins l'un parmi la date de livraison, la destination de livraison, l'expéditeur de l'objet (14), le destinataire de l'objet (14), les données douanières ou le contenu du colis.

15. Procédé selon l'une quelconque des revendications précédentes 12 à 14, dans lequel la mise en stock-tampon de l'objet (14) dans le système à pochettes (3) comprend la mise en stock-tampon de l'objet (14) pendant un intervalle de temps spécifié et/ou jusqu'à ce qu'une condition soit remplie, dans lequel, de préférence, la vérification du fait que la condition est remplie ou non comprend la vérification des données d'état de l'objet (14), les données d'état comprenant de préférence au moins l'un parmi la date de livraison, la destination de livraison, l'expéditeur de l'objet (14), le destinataire de l'objet (14), l'identité et/ou l'adresse de l'expéditeur et/ou du destinataire, les données douanières ou le contenu.

16. Procédé selon la revendication 15, dans lequel l'objet (14) est transféré au premier trieur (2), lorsque la condition est remplie, et/ou dans lequel l'objet (14) est déchargé, lorsque l'intervalle de temps spécifié est écoulé et la condition n'est pas remplie.

17. Procédé selon l'une quelconque des revendications précédentes 12 à 16, dans lequel un deuxième objet (14) est chargé dans le système à pochettes (3) avec une station de chargement du système à pochettes (3), et, après le chargement du deuxième objet (14) dans le système à pochettes (3), le deuxième objet (14) est soit mis en stock-tampon dans le système à pochettes (3) soit transféré vers le premier trieur (2) avec une deuxième station de transfert (5).

18. Procédé selon l'une quelconque des revendications précédentes 12 à 17, dans lequel le transfert de l'objet (14) depuis le premier trieur (2) vers le système à pochettes (3) comprend
- le transfert direct de l'objet (14) depuis un premier moyen de manutention de charge (12) du premier trieur (2) dans ou sur un deuxième moyen de manutention de charge (13) du système à pochettes (3) en le déposant dans le deuxième moyen de manutention de charge (13) ; et/ou
- le déchargement de l'objet (14) à un point de transfert (17) d'une première station de transfert (4) depuis un premier moyen de manutention de charge (12) du premier trieur (2), et le transfert de l'objet (14) par un robot (19), un convoyeur (20), une goulotte (21) et/ou un travailleur (22) vers un deuxième moyen de manutention de charge (13) du système à pochettes (3).

19. Procédé selon l'une quelconque des revendications précédentes 12 à 18, dans lequel le transfert de l'objet (14) depuis le système à pochettes (3) vers le premier trieur (2) comprend
- le transfert direct de l'objet (14) d'un deuxième moyen de manutention de charge (13) du système à pochettes (3) dans ou sur un premier moyen de manutention de charge (12) du premier trieur (2) en déposant celui-ci dans le deuxième moyen de manutention de charge (13) ; et/ou
- le déchargement de l'objet (14) à un point de transfert (18) d'une deuxième station de transfert (5) depuis un deuxième moyen de manutention de charge (13) du système à pochettes (3), et le transfert de l'objet (14) par un robot (19), un convoyeur (20), une goulotte (21) et/ou un travailleur (22) vers un premier moyen de manutention de charge (12) du premier trieur (2).
